## Europäisches Patentamt
## European Patent Office
## Office européen des brevets

(11) Veröffentlichungsnummer : **0 066 868**
**B1**

(12) **EUROPÄISCHE PATENTSCHRIFT**

(45) Veröffentlichungstag der Patentschrift :
**09.01.85**

(51) Int. Cl.⁴ : **B 01 D 53/04**

(21) Anmeldenummer : **82104954.1**

(22) Anmeldetag : **05.06.82**

(54) Verfahren zur Trennung von Gasgemischen mittels Druckwechsel-Adsorptionstechnik.

(30) Priorität : 06.06.81 DE 3122701

(43) Veröffentlichungstag der Anmeldung :
**15.12.82 Patentblatt 82/50**

(45) Bekanntmachung des Hinweises auf die Patenterteilung : **09.01.85 Patentblatt 85/02**

(84) Benannte Vertragsstaaten :
**BE DE FR GB NL**

(56) Entgegenhaltungen :
US-A- 3 338 030
US-A- 3 533 221
US-A- 3 564 816

(73) Patentinhaber : **Bergwerksverband GmbH**
**Franz-Fischer-Weg 61**
**D-4300 Essen 13 (DE)**

(72) Erfinder : **Knoblauch, Karl, Dr.**
**Semperstrasse 55**
**D-4300 Essen 1 (DE)**
Erfinder : **Richter, Ekkehard, Dr.**
**Schmachtenbergstrasse 89**
**D-4300 Essen 18 (DE)**
Erfinder : **Giessler, Klaus**
**Weindorfstrasse 21**
**D-4650 Gelsenkirchen (DE)**
Erfinder : **Körbächer, Werner**
**Striepensweg 4**
**D-4330 Mühlheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Trennung von Gasgemischen mittels Druckwechsel-Adsorptionstechnik gemäß dem Oberbegriff von Anspruch 1.

Bei der Trennung solcher aus zumindest zwei Komponenten bestehender Gasgemische, bei denen zumindest eine der Komponenten als Produktgas zu gewinnen ist, hat es sich bei Anwendung der Druckwechsel-Adsorptionstechnik eingebürgert, mehrere Adsorptionsreaktoren parallel zu betreiben, um einen kontinuierlichen Gastrennungs- und Gasproduktionsprozeß zu gewährleisten. Als Produktgase kommen solche in Frage, die im Vergleich zu den übrigen Gaskomponenten im wesentlich geringerem Maße an dem eingesetzten Adsorptionsmittel adsorbiert werden. Demzufolge ist das hier in Rede stehende Verfahren auch nicht auf bestimmte Ausgangsgasgemische oder bestimmte Produktgaskomponenten eingeschränkt. Die Ausbeute an Produktgas ist bei dem bekannten Verfahren der Eingangs genannten Art dadurch beschränkt, daß relativ große Mengen an Produktgas für Spülzwecke benötigt werden, die z. B. mehr als 15 % der Produktgasmenge ausmachen können — dies trifft vor allem dann zu, wenn relativ fest adsorbierte Gaskomponenten bei der Adsorberregeneration (Desorption) durch Druckentspannung und Spülen zu entfernen sind.

Der Erfindung liegt die Aufgabe zugrunde, die Ausbeute an Produktgas aus dem zu trennenden Gasgemisch zu erhöhen. Die Lösung dieser Aufgabe basiert auf dem Gedanken, bei einer zweistufig ausgeführten Spülung des Adsorptionsmittels den ersten Teilspülschritt mit einem das Produktgas als Gaskomponente enthaltenden Gasgemisch von schlechterer als Produktgasqualität und besser als der Qualität des adsorbierten Gasgemisches durchzuführen ; hierzu ist z. B. Rohgas geeignet. Überraschenderweise ist aber sogar noch eine Ausbeutesteigerung möglich, wenn dasjenige Gasgemisch für den ersten Spülschritt eingesetzt wird, das in einem ersten von mindestens zwei Gegenstrom-Druckentspannungsschritten anfällt, und es überrascht weiterhin, daß der sich erfindungsgemäß einstellende Spüleffekt praktisch ebenso groß ist wie derjenige, der sich bei einer Spülung ausschließlich mit Produktgas ergibt. Das nach dem ersten Teilspülschritt an dem Adsorptionsmittel nunmehr teilweise adsorbierte Spülgas wird, zusammen mit den dort verbliebenen, übrigen adsorbierten Gaskomponenten anschließend mit Produktgas aus der Adsorptionsmittelschicht verdrängt. Es versteht, sich, daß der erste Spülschritt spätestens dann beendet wird, wenn der Partialdruck der vom Adsorptionsmittel fortzuspülenden, adsorbierten Komponente auf dem Adsorptionsmittel und im Spülgas der gleiche ist. Hinsichtlich der bevorzugten Ausführungsformen der Erfindung wird auf die Ansprüche verwiesen.

Durch die kennzeichnenden Merkmale von Anspruch 1 wird ein wesentlich geringerer Verbrauch an Produktgas für Spülzwecke bei gleicher Produktgasreinheit erreicht.

Die Beendigung des Adsorptionsschrittes erfolgt bevorzugt dann, wenn die Adsorptionsmittelschicht des Trennreaktors soweit mit den unerwünschten Gaskomponenten beladen ist, daß das abströmende Produktgas noch die erforderliche Reinheit aufweist.

Als Adsorptionsmittel eignen sich im Prinzip all diejenigen, die auf dem Erfindungsgebiet bisher Verwendung gefunden haben — wie Aktivkohlen, Kohlenstoffmolekularsiebe, Zeolithe und dergl.

Die Druck- und Temperaturbedingungen bewegen sich im Rahmen des auf dem Erfindungsgebiet üblichen.

Unter Ausbeute im Sinne der Erfindung ist zu verstehen : das Verhältnis des Mengenstromes der als Produktgas abströmenden Gaskomponenten, soweit er nicht für Spül- und Druckaufbauzwecke benötigt wird, zum Mengenstrom der zu gewinnenden Gaskomponenten im Rohgas, das der Anlage zugeführt wird.

Die Adsorption wird bevorzugt auf einen deutlich höherem Druck als Atmosphärendruck erfolgen ; es kann deshalb ausreichen, die Druckentspannung nur bis etwa auf Atmosphärendruck durchzuführen und bei diesem Druck zu Spülen. Es versteht sich aber, daß die Druckentspannung durch Vakuumanwendung auch auf einen erheblich niedrigeren Druck als Atmosphärendruck erfolgen kann und bei dem erreichten Enddruck die Spülung durchgeführt wird — dabei ist es sogar möglich, die Adsorption dann bei etwa Atmosphärendruck durchzuführen.

Ein besonders guter Spüleffekt im ersten Gegenstrom-Spülschritt wird dann erreicht, wenn hierfür, gemäß Anspruch 2, ausschließlich dasjenige Entspannungsgas verwendet wird, das während 1/50 bis 1/2 der Gesamtentspannungszeit abströmt.

Wenn man den beiden Gegenstrom-Druckentspannungsschritten noch einen weiteren Druckentspannungsschritt vorschaltet, indem man das adsorbierte und in der Adsorptionsmittelschicht befindliche Gasgemisch zunächst während einer kurzen Zeit im Gleichstrom zur Adsorptionsrichtung aus dem Trennreaktor abströmen läßt, steht einem ein zumindest für den ersten Druckaufbau — vorzugsweise im Gegenstrom — geeignetes Entspannungsgas zu Verfügung (Anspruch 3). Das bei einem solchen vorgeschalteten Gleichstrom-Druckentspannungsschritt abströmende Entspannungsgas kann aber auch, gemäß Anspruch 4, unmittelbar einer weiteren Adsorptionsmittelschicht zugeführt werden, welche im Prinzip auf die gleiche Weise betrieben wird wie die Adsorptionsmittelschicht im Trennreaktor, nur mit dem Unterschied, daß die Durchströmung und Adsorption bei einem geringeren Druck als dem Rohgasdruck erfolgt und sich zudem dieser Druck während des Durchströmens auf einen Zwischendruck zwischen Rohgasdruck und dem Restdruck nach vollständiger Druckentspannung im Trennreaktor erfolgt. Diese Vorgehensweise eignet sich besonders bei hohen Rohgasdrücken und man erhält auf diese Weise ein für Spül- und Druckaufbauzwecke, aber auch bei hinreichender Menge einfach als Produktgas zu verwendendes, am Ende des Nachadsorbers abströmendes Gas.

Die Verwendung eines dem Trennreaktor vorgeschalteten Vorfilters, der z. B. auch aus einer Adsorptionsmittelschicht bestehen kann, sorgt dafür, daß besonders stark adsorbierende Gaskomponenten wie Kohlenwasserstoffe mit mindestens zwei C-Atomen, die häufig als Spurenunreinigungen in zu trennenden Gasgemischen auftreten, nicht in den Trennreaktor gelangen und damit die Standzeit dessen Adsorptionsmittel erheblich verbessern (Anspruch 5). Sowohl der Nachadsorber gemäß Anspruch 4, als auch der Vorfilter gemäß Anspruch 5 können, genau wie der Trennreaktor, als Druckwechseladsorber betrieben werden.

Weitere Vorteile und Ausgestaltungen der Erfindung ergeben sich aus der nachfolgenden Beschreibung von Ausführungsbeispielen anhand der beiliegenden Zeichnung. In dieser zeigen :

Figur 1 die schematische Darstellung einer 4-Adsorber-Anlage, ausschließlich aus Trennreaktoren ;

Figur 2 die schematische Darstellung einer 4-Adsorber-Anlage mit Trennreaktoren und Nachadsorbern.

In den nachfolgenden Beispielen wird jeweils nur ein vollständiger Druckwechselzyklus für einen der parallel geschalteten Adsorber erläutert, so daß sich z. B. Öffnungs- oder Schließzustände der zugehörigen Ventile nur auf den Druckwechselzyklus des jeweils betroffenen Adsorbers beziehen. Die übrigen Adsorber und zugehörigen Ventile werden dann in entsprechender Weise mit zeitlicher Verschiebung betätigt. Im übrigen können die ganzen Beispiele selbstverständlich mit einem einzigen Adsorber — ggf. zusammen mit einem Nachadsorber — durchgeführt werden, sofern geeignete Zwischenspeicher für die verschiedenen Gasströme zur Verfügung stehen.

Beispiel 1

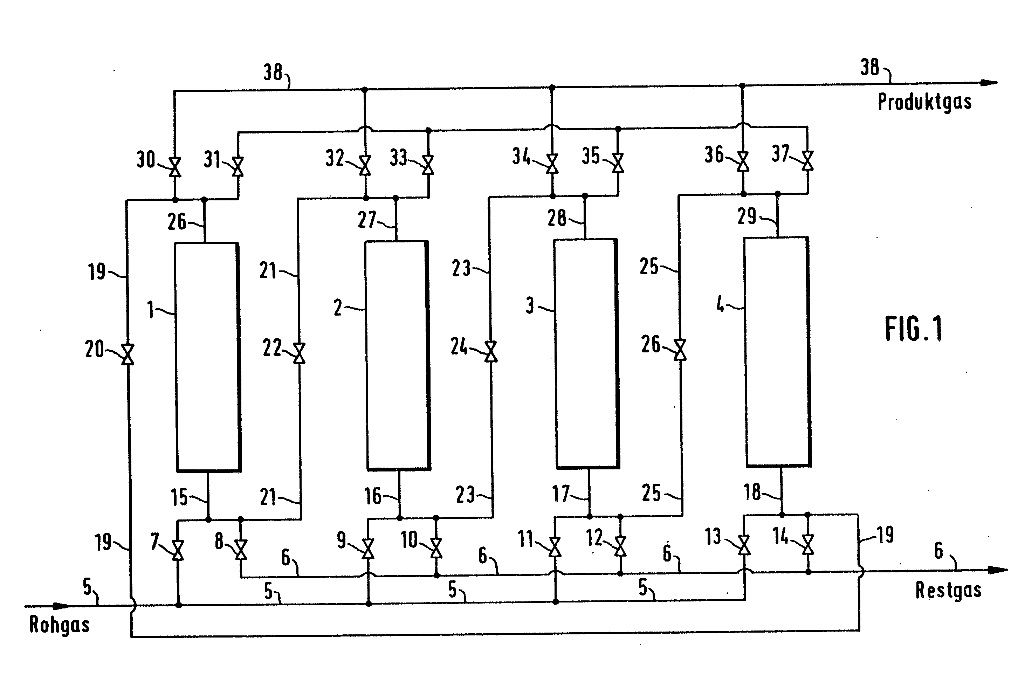

Eine 4-Absorber-Anlage gemäß Fig. 1 wurde folgendermaßen betrieben :

Rohgas strömt über eine Sammelleitung 5, Ventil 7 und Leitung 15 durch den Trennreaktor 1, der zu Beginn der Adsorptionsphase mit Produktgas gefüllt ist. Am Ende des Trennreaktors strömt über Leitung 26 und Ventil 30 das zu gewinnende Produktgas in die Produktgasleitung 38. Die Adsorptionsphase wird spätestens dann beendet, wenn die vorgegebene Reinheit des Produktgases aufgrund durchbrechender unerwünschter Gaskomponenten unter einen vorgegebenen Wert sinkt ; hierzu werden Ventil 7 und Ventil 30 geschlossen. In einem ersten Gegenstrom-Druckentspannungsschritt strömt nun Entspannungsgas aus dem Trennreaktor über eine Leitung 21 und ein geöffnetes Drosselventil 22 in den Trennreaktor 2 ein, der zuvor auf Restgasdruck entspannt worden war. Dort spült das erwähnte Entspannungsgas während einer kurzen Phase das im Trennreaktor 2 befindliche Adsorptionsmittel im Gegenstrom ; hierbei verläßt ein mit den unerwünschten Gaskomponenten stark belastetes Restgas den Trennreaktor 2 über Leitung 16 und Ventil 10 in die Restgasleitung 6. Diese Phase wird beendet, wenn eine vorgegebene Zeit abgelaufen oder wenn der Druck im Trennreaktor 1 einen vorgegebenen Wert unterschritten hat. Danach wird bei geschlossenem Ventil 22 und geöffnetem Ventil 8 der Druck im Trennreaktor 1 weiter im Gegenstrom zu Adsorptionsrichtung über Restgasleitung 6 abgebaut bis er den Restgasdruck erreicht. Danach erfolgt der erste Gegenstrom-Spülschritt im Trennreaktor 1 mit Entspannungsgaz aus dem ersten Gegenstrom-Entspannungsschritt von Trennreaktor 4. Dabei strömt dieses Spülgas über Leitungen 18/19 bei geöffnetem Ventil 20 durch den Trennreaktor 1 und verläßt diesen über die Restgasleitung. Zum Abschluß dieses ersten Gegenstrom-Spülschrittes wird Ventil 20 geschlossen und bei geöffnetem Ventil 30 strömt Produktgas im Gegenstrom durch den Trennreaktor 1 und verläßt diesen durch die Restgasleitung. Der nachfolgende Druckaufbau im Trennreaktor 1 erfolgt nach Schließen von Ventil 8 mittels Produktgas im Gegenstrom bis auf Adsorptionsdruck.

Alle anderen Trennreaktoren durchlaufen die gleichen Schritte in der beschriebenen Reihenfolge mit der entsprechenden zeitlichen Verschiebung gegenüber dem Zyklus von Trennreaktor 1. Mittels einer in dieser Weise geschalteten 4-Adsorber-Anlage wurde nachfolgendes Ausführungsbeispiel realisiert :

Jeder der Trennreaktoren mit einem Durchmesser von 0,1 m war mit je 0,025 m³ Kohlenstoffmolekularsieb gefüllt. Dabei handelte es sich um zylindrisch geformte Partikel mit einer Länge von 4 mm und einem Durchmesser von 2 mm. Die spezifische Oberfläche nach Brunauer, Emmett und Teller betrug 1 100 m²/g. Das Rohgas setzte sich zusammen aus 60 Vol.-% $H_2$, 1,3 Vol.-% $CO_2$, 7 Vol.-% $N_2$, 6 Vol.-% CO und 25,7 Vol.-% $CH_4$. Der Adsorptionsdruck betrug 17 bar, der Enddruck bei der Spülung 1 bar. Die Temperatur entsprach Umgebungstemperatur. Während des Adsorptionsschrittes wurden jeweils 10,6 m³/h (Gasvolumina gelten alle unter Normbedingungen) in den Trennreaktor eingeleitet und dabei 5,29 m³/h Produktgas gewonnen. Die Adsorptionsphase dauerte 300 s. Während des ersten Gegenstrom-Druckentspannungsschrittes mit einer Dauer von 20 s werden 470 l Entspannungsgas mit einer mittleren Zusammensetzung von 51,7 Vol.-% $H_2$, 1,4 Vol.-% $CO_2$, 10,5 Vol.-% $N_2$, 9,2 Vol.-% CO und 27,2 Vol.-% $CH_4$ aus dem Trennreaktor gewonnen.

Dieses Gas wird zur Spülung eines anderen Trennreaktors im Gegenstrom bis 1 bar verwendet. Im zweiten Gegenstrom-Druckentspannungsschritt mit einer Dauer von 280 s erfolgte die Druckabsenkung auf den Restgasdruck von 1 bar. Die totale Restgaszusammensetzung aus dem zweiten Gegenstrom-Druckentspannungsschritt und den nachfolgenden Spülschritten mit Gegenstrom-Druckentspannungsgas und mit Produktgas betrug 20,15 Vol.-% $H_2$, 2,6 Vol.-% $CO_2$, 13,97 Vol.-% $N_2$, 11,98 Vol.-% CO und 51,3 Vol.-% $CH_4$. Demnach betrug die resultierende Produktgasausbeute 83,2 %.

Beispiel 2

Zunächst erfolgte wieder die Adsorption im Trennreaktor 1, indem Rohgas durch Leitung 5, Ventil 7 und Leitung 15 in den Trennreaktor, der zu Beginn der Adsorption völlig mit Produktgas bei etwa Rohgasdruck gefüllt war, geleitet wurde. Am Ende des Trennreaktors 1 strömte über Leitung 26 und Ventil 30 reines Produktgas in die Produktgasleitung 38. Bevor Spuren der unerwünschten Gaskomponenten den Adsorberausgang erreichten, wurde die Adsorption beendet, indemm Ventile 7 und 30 geschlossen wurden. Danach folgte eine dreistufige Druckentspannung, und zwar ein erster Gleichstrom-Druckentspannungsschritt, also in Adsorptionsrichtung, bei dem ein Gas, das primär nur Produktgas enthält, über Ventile 31 und 35 dem Trennreaktor 3, der sich im gespülten Zustand auf Restdruck befand, im Gegenstrom eingeleitet bis in diesem eine vorgegebene Druckerhöhung erreicht bzw. bis Maximaldruckausgleich zwischen dem Trennreaktor 1 und Trennreaktor 3 erfolgt war. Dann wurde Ventil 31 geschlossen und Ventil 22 geöffnet, so daß in einem ersten Gegenstrom-Druckentspannungsschritt Entspannungsgas über Leitung 21 dem Adsorber 2, dessen Entspannungsschritte gerade abgeschlossen waren und der sich etwa auf Restgasdruck befand, im Gegenstrom bei geöffnetem Ventil 10 durchspült wurde und das Spülgas in die Restgasleitung 6 gelangte. Dieser Entspannungsschritt wurde nach vorgegebener Zeit beendet bzw. wenn der Druck im Trennreaktor 1 einen vorgegebenen Wert erreicht hatte. Dann wurde Ventil 22 geschlossen und Ventil 8 geöffnet, so daß im zweiten Gegenstrom-Druckentspannungsschritt das Entspannungsgas direkt in die Restgasleitung 6 abströmte.

An die Druckentspannung schlossen sich zwei Gegenstrom-Spülschritte an, und zwar zunächst mit Entspannungsgas aus dem ersten Gegenstrom-Druckentspannungsschritt des Trennreaktors 4 über Leitung 19 bei geöffnetem Ventil 20 ; durch das geöffnete Ventil 8 gelangte das Gegenstromspülgas in die Restgasleitung 6. Danach wurde Ventil 20 geschlossen und Ventil 30 geöffnet, so daß für den zweiten Gegenstrom-Spülschritt Produktgas durch den Trennreaktor 1 bei geöffnetem Ventil 8 durchströmte und über Restgasleitung 6 abgeführt wurde. Der nachfolgende Druckaufbau erfolgte zweistufig im Gegenstrom, indem zunächst Gleichstrom-Druckentspannungsgas aus Trennreaktor 3, bei geöffneten Ventilen 35 und 31, bei geschlossenem Ventil 8, in den Trennreaktor 1 überströmte. Anschließend erfolgte der restliche Druckaufbau bei geschlossenem Ventil 31 und geöffnetem Ventil 30 mit Produktgas aus Leitung 38. Damit war ein voller Druckwechselzyklus abgeschlossen und bei geöffnetem Ventil 7 konnte ein neuer Adsorptionsschritt beginnen. Die anderen Trennreaktoren durchlaufen dieselben Schritte in der beschriebenen Reihenfolge wie Trennreaktor 1, lediglich mit zeitlicher Versetzung. In einer so geschalteten 4-Adsorber-Anlage wurde der nachfolgend beschriebene Gastrennprozeß durchgeführt :

Vier gleiche Trennreaktoren mit 0,10 m Durchmesser waren mit 0,025 $m^3$ eines Kohlenstoffmolekularsiebes aus zylindrisch geformten Partikeln einer Länge von 4 mm und eines Durchmessers 2 mm sowie einer spezifischen Oberfläche nach Brunauer, Emmett und Teller von 1 100 $m^2/g$ gefüllt. Als Rohgas wurde ein Gasgemisch aus 60 Vol.-% $H_2$, 1,3 Vol.-% $CO_2$, 7 Vol.-% $N_2$, 6 Vol.-% CO und 25,7 Vol.-% $CH_4$ bei einem Druck von 17 bar durch die Trennreaktoren geleitet und an ihren Enden als Produktgas Wasserstoff einer Reinheit von 99,9% gewonnen. Während des Adsorptionsschrittes wurden jeweils 10 $m^3/h$ (Gasvolumina alle unter Normbedingungen) in den Trennreaktor eingeleitet und dabei 5,05 $m^3/h$ Produktgas gewonnen. Die Adsorptionsphasen dauerten etwa 1 200 s. Bei der nachfolgenden Druckentspannung wurde in einem ersten Gegenstrom-Druckentspannungsschritt der Druck im jeweiligen Trennreaktor von 17 auf 15,7 bar abgesenkt und das dabei freiwerdende Entspannungsgas zur Gegenstrom- Spülung eines jeweils anderen Trennreaktors verwendet. Im zweiten Gegenstrom-Druckentspannungsschritt erfolgte die Druckabsenkung auf den Restgasdruck von etwa 1 bar. Die totale Restgaszusammensetzung aus dem zweiten Gegenstrom-Druckentspannungsschritt und den beiden nachfolgenden Spülschritten — der zweite mit Produktgas — betrug 2,63 Vol.-% $CO_2$, 14,4 Vol.-% $N_2$, 19,19 Vol.-% $H_2$, 12,12 Vol.-% CO und 54,92 Vol.-% $CH_4$ bei einem Restgasvolumenstrom von 4,95 $m^3/h$. Demnach betrug die resultierende Produktgasausbeute 84,2 %.

Beispiel 3

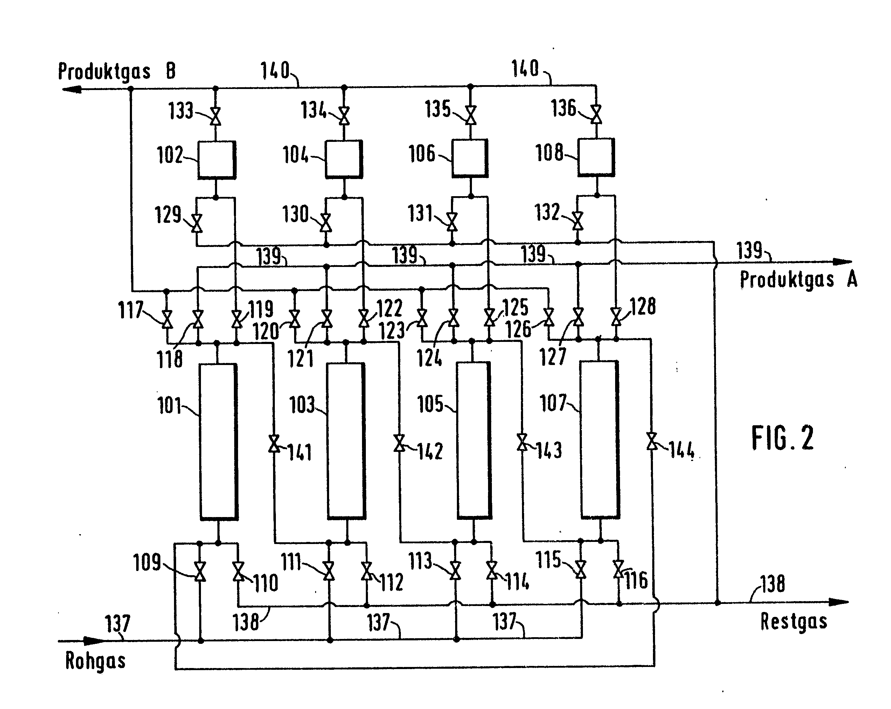

Dieses Ausführungsbeispiel wurde an einer 4-Adsorber-Anlage mit Nachadsorbern gemäß Fig. 2 durchgeführt. Die Funktionsweise für einen Trennreaktor mit Nachadsorber wird nachfolgend erläutert :

Rohgas, das wenigstens eine vom gewünschten Produktgas abzutrennende Komponente aufweist, liegt z. B. unter erhöhtem Druck zwischen 10 und 35 bar vor. Mit einem nur um den Druckverlust in den Anlagenteilen verringerten Druck wird ein Produktgas A erzeugt, während das Restgas am Ende der Druckentspannungsschritte und während der Spülschritte mit einem erheblich niedrigeren Druck anfällt, der in der Regel über 1 bar liegt, sofern nicht eine Vakuumdesorption durchgeführt wird. Das aus den Nachadsorbern abströmende Produktgas B wird bei einem Druck gewonnen, der zwischen den Drücken des Restgases und des Produktgases A liegt. Zu Beginn eines Druckwechselzyklus von Trennreaktor 101 wird dieser mit Produktgas bei etwa Rohgasdruck gefüllt, während sich Nachadsorber 102 im gespülten Zustand bei Restgasdruck befindet. Trennreaktor 101 wird aus Rohgasleitung 137 über Ventil 109 durchströmt. Die unerwünschte(n) Komponente(n) wird (werden) durch Adsorption im Adsorptionsmittel des Trennreaktor festgehalten, so daß das Produktgas über Ventil 118 in die Produktgasleitung 139 strömt.

Während dieser Zeit wird im Nachadsorber 102 der Druck vom Restgasdruck auf den Druck von Produktgas B erhöht, indem Produktgas aus der Produktgasleitung 140 über Ventil 133 in diesem Adsorber gelangt. Diese Arbeitsschritte im Trennreaktor 101 und Nachadsorber 102 werden abgeschlossen, bevor nennenswerte Spuren der unerwünschten Komponenten am Ende des Trennreaktors 101 austreten können. Danach wird der Trennreaktor 101 in drei Schritten druckentspannt.

Im ersten Schritt wird das Trennreaktor 101 im Gegenstrom verlassende Gagemisch über Ventil 144 zum Spülen von Trennreaktor 107, dessen Entspannung zuvor abgeschlossen wurde, verwendet. Nach Schließen von Ventil 144 wird Ventil 119 geöffnet, und im zweiten (Gleichstrom) Entspannungsschritt strömt ein Gasgemisch, das neben den nicht adsorbierbaren Gasen nur diejenigen Gase enthält, die am schwächsten adsorbiert werden, durch den Nachadsorber 102. Letzterer befindet sich auf dem Druck von Produktgas B. In Nachadsorber 102 werden auf diesem Druckniveau die adsorbierbaren Komponenten aus dem zweiten Entspannungsschritt von Trennreaktor 101 abgeschieden, so daß während dieser Phase allein Produktgas in Produktgasleitung 140 gelangt. Diese Phase wird abgebrochen, wenn die Anteile der abzutrennenden Gaskomponenten im Gasgemisch zu hohe Werte erreicht haben.

Die nachfolgenden Schritte im Rahmen des zylindrischen Betriebs verlaufen für Trennreaktor 101 und Nachadsorber 102 ohne direkte Wechselwirkung, so daß sie nachfolgend getrennt beschrieben werden. Trennreaktor 101 wird über Ventil 110 im dritten Entspannungsschritt bis auf den Restgasdruck im Gegenstrom entspannt. Danach wird er mit Gas aus dem ersten Entspannungsschritt von Trennreaktor 103 in einem ersten Spülschritt bei geöffneten Ventilen 141 und im Gegenstrom gespült. Danach wird er mit Produktgas B aus 110 Produktgasleitung 140 bei geöffneten Ventilen 117 und 110 im Gegenstrom gespült. Dieses Spülgas gelangt in die Restgasleitung 138. Der Druckaufbau in Trennreaktor 101 erfolgt in zwei Stufen jeweils im Gegenstrom. In der ersten Stufe wird Produktgas B aus Leitung 140 über Ventil 117 in den Trennreaktor 101 bis zu einem Druck nahe dem des Produktgases B aufgedrückt. In der zweiten Stufe wird der Druck bis auf den des Produktgases A erhöht, indem Produktgas A aus Leitung 139 über Ventil 118 in den Trennreaktor 101 strömt. Danach beginnt für Trennreaktor 101 ein neuer Druckwechselzyklus mit der Adsorption von Rohgas. Bis zu diesem Umschaltzeitpunkt müssen im Nachadsorber 102 die Schritte Entspannen und Spülen mit Produktgas abgeschlossen sein. Die Entspannung beginnt nach Abschluß der Adsorption, der mit dem Abschluß des zweiten Entspannungsschrittes des Trennreaktors 101 identisch ist. Das bei der Gegenstromentspannung freiwerdende Gasgemisch strömt über Ventil 129 in die Restgasleitung 128. Nach Beendigung der Entspannung auf Restgasdruck wird Nachadsorber 102 mit Produktgas B gespült, wobei dieses Gas aus Produktgasleitung 140 über Ventil 133. Nachadsorber 102 und Ventil 129 den Weg in Restgasleitung 138 nimmt. Nach einer vorgegebenen Zeit wird der Spülvorgang beendet und ein neuer Zyklus mit dem Gegenstromdruckaufbau für Nachadsorber 102 begonnen. Es ist nicht notwendig, daß die Beendigung des Druckaufbaus in Trennreaktor 101 mit der Beendigung der Spülung in Nachadsorber 102 seitlich zusammenfällt.

Der zyklische Betrieb der anderen Trennreaktoren und Nachadsorber verläuft analog.

## Beispiel 4

Die Druckwechseladsorptionsanlage enthält vier gleiche Trennreaktoren mit 0,10 m Durchmesser und einem Volumen von 0,25 m$^3$ sowie vier gleiche Nachadsorber mit einem Durchmesser von 0,10 m und 0,1 m$^3$ Adsorptionsvolumen. Sie sind gefüllt mit einem Kohlenstoffmolekularsieb aus zylindrisch geformten Partikeln einer Länge von 4 mm und eines Durchmessers von 2 mm sowie einer spezifischen Oberfläche nach Brunauer, Emmet und Teller von 1 100 m$^2$/g gefüllt. Als Rohgas wurde ein Gasgemisch aus 60 Vol.-% H$_2$, 1,3 Vol.-% CO$_2$, 7 Vol.-% N$_2$, 6 Vol.-% CO und 25,7 Vol.-% CH$_4$ eingesetzt. Der Adsorptionsdruck in dem Trennreaktor betrug 17 bar, der Adsorptionsdruck in den Nachadsorbern 8 bar und der Restgasdruck 1 bar. Die Temperatur entsprach Umbegungstemperatur. Während des Adsorptionsschrittes wurden jeweils 10,6 m$^3$/h (Gasvolumina jeweils unter Normalbedingungen) in den Trennreaktor eingeleitet und dabei 5,45 m$^3$ Wasserstoff mit einer Reinheit von 99,9 % gewonnen. Die Adsorptionsphasen in den Trennreaktoren dauerten etwa 1 200 s. Bei der nachfolgenden Druckentspannung entströmte im ersten Gegenstromentspannungsschritt für 10 s dem Trennreaktor 101 ein Gasgemisch folgender Zusammensetzung : 48,1 Vol.-% H$_2$, 1,6 Vol.-% CO$_2$, 9,4 Vol.-% N$_2$, 8,0 Vol.-% CO und 32,9 Vol.-% CH$_4$. Dieses wird im Trennreaktor 107 für den ersten Spülschritt verwendet. Im zweiten Gleichstromentspannungsschritt strömt ein Gasgemisch aus Trennreaktor 101 in den Nachadsorber 102 mit folgender Zusammensetzung : ca. 0,1 Vol.-% $CO_2$, 32,2 Vol.-% $N_2$, 27,0 Vol.-% CO und 22,3 Vol.-% $CH_4$. Im dritten Entspannungsschritt verläßt bei einer Gleichstromentspannung ein Gasgemisch den Trennreaktor in die Restgasleitung mit der Zusammensetzung 12 Vol.-% $H_2$, 2,8 Vol.-% $CO_2$, 12,7 Vol.-% $N_2$, 11,8 Vol.-% CO und 60,7 Vol.-% $CH_4$. Das Gasgemisch, das bei den nachfolgenden beiden Spülschritten aus dem Trennreaktor in die Restgasleitung gefördert wird, enthält bei einem Druck von 1 bar 18,7 Vol.-% $H_2$, 4,8 Vol.-% $CO_2$, 2,4 Vol.-% $N_2$, 2,0 Vol.-% CO und 72,1 Vol.-% $CH_4$.

Die Nachadsorber werden bei einem Druck von 7 bar betrieben bei der Adsorption. Bei der Entspannung und Spülung mit Produktgas wird ein Gasgemisch mit einer Zusammensetzung von 25,6 Vol.-% $H_2$, 33,3 Vol.-% $N_2$, 25,4 Vol.-% CO und 15,7 Vol.-% $CH_4$ erzeugt.

Die Gesamtrestgasmenge aus den Trennreaktoren und den Nachadsorbern beträgt 5,15 m³/h. Das Restgas hat folgende Zusammensetzung : 17,8 Vol.-% $H_2$, 2,7 Vol.-% $CO_2$, 14,1 Vol.-% $N_2$, 12,4 Vol.-% CO und 53,5 Vol.-% $CH_4$. Die Wasserstoffausbeute beträgt 85,8 %.

**Ansprüche**

1. Verfahren zur Trennung von Gasgemischen mittels Druckwechsel-Adsorptionstechnik an Adsorptionsmitteln, bei welchem das Gasgemisch, vorzugsweise unter erhöhtem Druck, in die Adsorptionsmittelschicht eines Trennreaktors eingeleitet wird, in welcher die unerwünschten Gaskomponenten adsorbiert werden und an deren Ende die übrigen Gaskomponenten (Produktgas) abströmen sowie, nach Abschluß der Adsorption, eine Druckentspannung, eine Spülung des Adsorptionsmittels und ein anschließender Druckaufbau auf Adsorptionsdruck in der Adsorptionsmittelschicht, vorzugsweise im Gegenstrom zur Adsorptionsrichtung, erfolgt und danach ein neuer Adsorptionsschritt beginnt, dadurch gekennzeichnet, daß sowohl die Druckentspannung als auch die Spülung zweistufig im Gegenstrom zur Adsorptionsrichtung erfolgen, indem das Entspannungsgas aus dem ersten Gegenstrom-Druckentspannungsschritt als Spülgas für den ersten Spülschritt verwendet, das Entspannungsgas aus dem zweiten Gegenstrom-Druckentspannungsschritt als Restgas abgeleitet sowie Produktgas als Spülgas für den zweiten Spülschritt verwendet wird.

2. Verfahren nach Anspruch 1, dadurch gekennzeichnet, daß der erste Gegenstrom-Druckentspannungsschritt 1/50 bis 1/2 der Gesamtentspannungszeit dauert.

3. Verfahren nach Anspruch 1 oder 2, dadurch gekennzeichnet, daß den beiden Gegenstrom-Druckentspannungsschritten ein Gleichstrom-Druckentspannungschritt vorgeschaltet und das dabei abströmende Entspannungsgas für Druckaufbauzwecke verwendet wird.

4. Verfahren nach Anspruch 1 oder 2, dadurch gekennzeichnet, daß den beiden Gegenstrom-Druckentspannungsschritten ein Gleichstrom-Druckentspannungsschritt vorgeschaltet und das dabei abströmende Entspannungsgas unmittelbar einer weiteren Adsorptionsmittelschicht zugeführt wird, in der die unerwünschten Gaskomponenten adsorbiert werden und an deren Ende Produktgas abströmt.

5. Verfahren nach einem oder mehreren der Ansprüche 1 bis 4, dadurch gekennzeichnet, daß besonders stark adsorbierende Gaskomponenten in einem dem Trennreaktor vorgeschalteten Vorfilter abgeschieden werden.

**Claims**

1. A process for the separation of gas mixtures by pressure-swing adsorption on adsorption agents, in which the gas mixture, preferably under elevated pressure, is introduced into the adsorption agent layer of a separating reactor, in which layer the undesired gas components are adsorbed and at the end of which the remaining gas components (product gas) flows off, and, after adsorption in completed, a pressure relase, a scavenging of the adsorption agent, and a subsequent rise in pressure to adsorption pressure occur in the adsorption agent layer, preferably in counterflow to the direction of adsorption, and then a new adsorption step begins, characterized in that both the pressure release and the scavenging take place in two stages in counterflow to the direction of adsorption, while the released gas from the first counterflow pressure-release stage is used as a scavenging gas for the first scavenging stage, the released gas from the second counterflow pressure-release stage is led off as a residual gas, and product gas is used as a scavenging gas for the second scavenging stage.

2. A process according to Claim 1, characterized in that the first counterflow pressure-release stage lasts for 1/50 to 1/2 of the total release period.

3. A process according to Claim 1 or 2, characterized in that a parallel-flow pressure-release stage precedes the two counterflow pressure-release stages and the released gas flowing off is used for the purpose of increasing the pressure.

4. A process according to Claim 1 or 2, characterized in that a parallel-flow pressure-release stage precedes the two counterflow pressure-release stages and the released gas flowing off is fed directly to a further adsorption agent layer in which the undesired gas components are adsorbed and at the end of which product gas flows off.

5. A process according to one or more of Claims 1 to 4, characterized in that particularly strongly adsorbing gas components are separated in a first filter arranged upstream of the separating reactor.

## Revendications

1. Procédé de séparation de composants de mélanges de produits gazeux par adsorption et désorption alternative sur des agents adsorbants, dans lequel le mélange gazeux est introduit, de préférence sous une pression accrue, dans la couche d'agent adsorbant d'un réacteur de séparation, dans laquelle le composant gazeux non recherché est adsorbé et que quittent les autres composants gazeux (gaz de production), l'adsorption étant suivie d'une détente, de l'élimination par rinçage de l'agent adsorbant et du retour à la pression d'adsorption dans la couche d'agent adsorbant, de préférence en contre-courant du sens de l'adsorption, puis d'un nouveau cycle d'adsorption, caractérisé en ce que la détente aussi bien que l'élimination sont réalisées en deux stades, en contre-courant du sens de l'adsorption, le mélange gazeux provenant du premier stade de détente étant utilisé comme gaz de rinçage dans le premier stade de rinçage, le mélange gazeux provenant du deuxième stade de détente étant soutiré comme gaz résiduel et les autres composants gazeux (gaz de production) servant de gaz de rinçage pour le deuxième stade de rinçage.

2. Procédé suivant la revendication 1, caractérisé en ce que la durée du premier stade de détente en contre-courant est entre 1/50e et la moitié de la durée totale de la détente.

3. Procédé suivant l'une des revendications 1 et 2, caractérisé en ce qu'il comprend, en amont des deux stades de détente en contre-courant, un stade de détente en courants parallèles, dont le mélange gazeux détendu soutiré est utilisé pour rétablir la pression.

4. Procédé suivant l'une des revendications 1 et 2, caractérisé en ce qu'il comprend, en amont des deux stades de détente en contre-courant, un stade de détente en courants parallèles, dont le mélange gazeux détendu soutiré est amené directement dans une couche d'agent adsorbant subséquente, qui adsorbe les composants gazeux indésirables et que quitte le gaz de production recherché.

5. Procédé suivant l'une quelconque des revendications 1 à 4, caractérisé en ce que les composants du mélange gazeux particulièrement faciles à adsorber sont séparés dans un filtre disposé en amont du réacteur de séparation.

FIG.1

FIG. 2

0 066 868